# EUROPEAN PATENT SPECIFICATION

(11) **EP 3 475 140 B1**
(45) Date of publication and mention of the grant of the patent: **22.01.2020**
(21) Application number: 17733774.8
(22) Date of filing: 20.06.2017
(51) Int. Cl.: B60D 5/00, B61G 5/10

(54) **GANGWAY PROVIDED WITH A MOVABLE CABLE HOLDER**
GANGWAY MIT EINEM BEWEGLICHEN KABELHALTER
PASSERELLE POURVUE D'UN PORTE-CÂBLE MOBILE

(30) Priority: 24.06.2016 GB 201611021
(43) Date of publication of application: 01.05.2019
(73) Proprietor: Bombardier Transportation GmbH, 10785 Berlin (DE)
(72) Inventor: PATTERSON, Dave, Derby, Derbyshire DE3 0TJ (GB)
(74) Representative: Alatis
(86) International application number: PCT/EP2017/065089
(87) International publication number: WO 2017/220578

(56) References cited:
- EP-A1- 0 562 598
- CN-U- 203 651 372
- US-A- 6 076 470

## Description

### TECHNICAL FIELD OF THE INVENTION

The present invention relates to a gangway between two vehicle bodies of an articulated vehicle, in particular a public transportation vehicle, in particular a rail vehicle, provided with cables running from one vehicle body to the other through the gangway.

### BACKGROUND ART

Cables that run through a gangway between two vehicle bodies of an articulated vehicle such as a rail vehicle are usually located very close to a vertical longitudinal median plane of the gangway, to minimise the movements of the cables when the one car body pivots relative to the other.

In various documents such as DE19621913, US2011272915, WO9742045 or US6076470, it has been suggested to arrange a cable above a passageway along a curved path that crosses a vertical longitudinal median plane of the gangway to accommodate the deformations of the passageway. The cable is supported by a bearing provided with a guide surface permitting a relative movement between the bearing and a frame, which can be a rectilinear movement in the longitudinal or transverse direction of the vehicle, or a circular translation.

However, whenever there is no room for the cable close to the vertical longitudinal median plane of the gangway, specific provisions have to be made to allow the cables to follow the pivoting movement of one car body relative to the other. A gangway according to the preamble of claim 1 is known from CN 203 651 372 U.

### SUMMARY OF THE INVENTION

The invention aims to provide means for facilitating the installation of cables in a gangway at a distance from the longitudinal vertical median plane of the gangway.

According to the invention, there is provided a gangway for a public transportation vehicle provided with cables running from a first vehicle body at a first end of the gangway to a second vehicle body at a second end of the gangway. The gangway comprises a passageway and is provided with a cable guide device comprising a fixed support, a cable holder for supporting a section of the cables and guiding means for guiding the cable holder with respect to the fixed support, the guiding means allowing the cable holder to move towards and away from a vertical longitudinal median plane of the gangway along a predetermined path. According to the invention, the fixed support and cable holder are located on one lateral side of the passageway. The path is tilted with respect to the vertical longitudinal median plane, resulting in a combined horizontal and vertical motion of the cable holder.

Thanks to the guiding means, the cable holder is movable with respect to the fixed support and can follow the deformation of the cables when they straighten or fold in a curve.

According to a preferred embodiment, the guiding means include a linear bearing for guiding the cable holder along a rectilinear path. The linear guide ensures that the motion of various cables held by the cable holder will have the same amplitude.

Advantageously, the path is tilted with respect to the vertical longitudinal median plane and preferably slopes upward away from the vertical longitudinal median plane of the gangway. Hence the weight of the cable holder and of the cables will tend to move the cable holder towards the vertical longitudinal median plane. Preferably, the rectilinear path is located in a vertical transverse plane perpendicular to the vertical longitudinal median plane of the gangway.

In practice, the cable holder comprises a plurality of through holes for receiving the cables. The cables may be loose in the cleat or clamped.

According to various embodiments, the gangway may further comprise one or more of the following:
- Inner and outer bellows, wherein the fixed support and cable holder are located between the inner and outer bellows.
- A gangway frame, wherein the fixed support is integral with or attached to the gangway frame
- A further cable guide device comprising a further fixed support, a further cable holder and further guiding means for guiding the further cable holder with respect to the further fixed support, the further guiding means allowing the further cable holder to move towards and away from the vertical longitudinal median plane of the gangway, wherein the further fixed support and further cable holder are located on the other side of the passageway.

Preferably, the allowed motion of the cable holder towards and away from the vertical longitudinal median plane of the gangway has an amplitude of at least 30 cm measured in a direction perpendicular to the vertical longitudinal median plane of the gangway.

According to another aspect of the invention, there is provided a vehicle comprising a first vehicle body, a second vehicle body and an articulated gangway as described hereinbefore between the first vehicle body and second vehicle body, the vehicle being provided with cables running from the first vehicle body at a first end of the gangway to the second vehicle body at a second end of the gangway, wherein a section of the cables is supported by the cable holder and the cables run along a curved path through the gangway at least when the first vehicle body and second vehicle body are aligned. The curved path provides the slack necessary for accommodating the relative movement between the vehicle bodies. In practice, the curved path is U-shaped.

According to one embodiment, the vehicle is further provided with a set of one or more first tubular receptacles fixed relative to the first vehicle body for receiving a first part of the cables and a set of one or more second tubular receptacles fixed relative to the second vehicle body for receiving a second part of the cables, wherein the cables run out of the set of first tubular receptacles at the first end of the gangway along the curved path through the gangway and into the set of second tubular receptacles at the second end of the gangway.

### BRIEF DESCRIPTION OF THE FIGURES

Other advantages and features of the invention will then become more clearly apparent from the following description of a specific embodiment of the invention given as non-restrictive examples only and represented in the accompanying drawings in which:

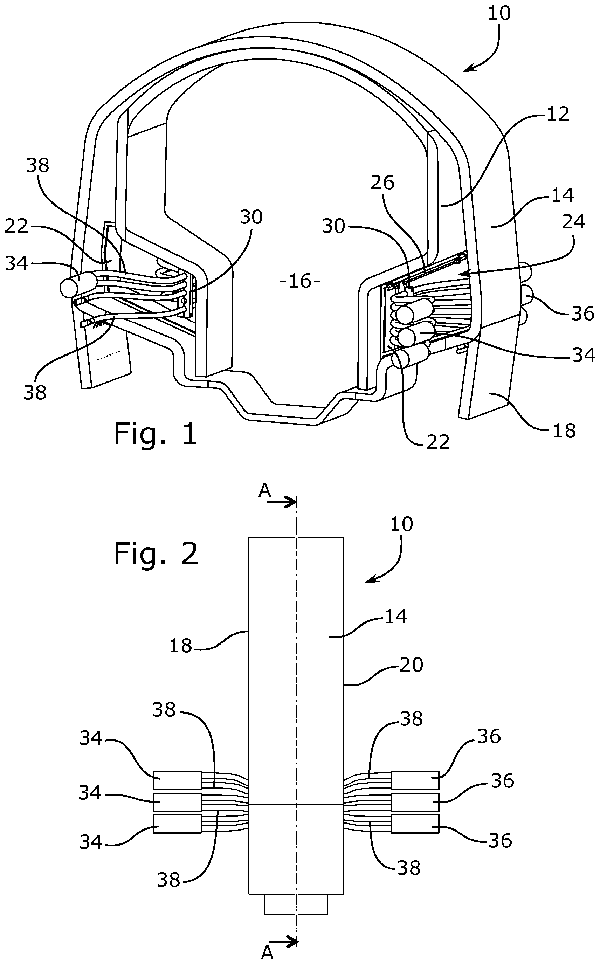

- Figure 1 is an isometric view of a gangway according to an embodiment of the invention;
- Figure 2 is a side view of the gangway of Figure 1;

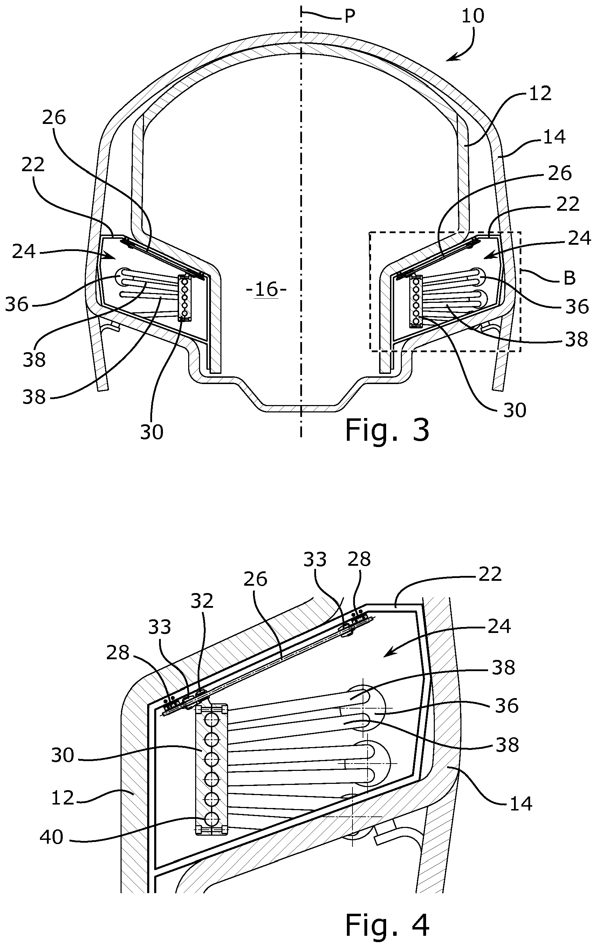

- Figure 3 is a cross-section of the gangway of Figure 1 through a section plane A-A of figure 2;
- Figure 4 is a detail B of Figure 3.

Corresponding reference numerals refer to the same or corresponding parts in each of the figures.

### DETAILED DESCRIPTION OF A PREFERRED EMBODIMENT

With reference to the figures, an articulated gangway **10** to be installed between two vehicle bodies of a public transportation vehicle comprises inner and outer bellows **12**, **14** surrounding a passageway **16** extending in a longitudinal direction from one end **18** of the gangway **10** to the other **20.** The gangway **10** is provided with two frames **22**, one on each side of the passageway **16**, located between the inner and outer bellows **12**, **14** for supporting the inner and outer bellows **12**, **14.** A cable guide device **24** located in an inner space surrounded by each frame. The cable guide device **24** comprises a tilted guide bar **26** fixed to the frame **22** by a pair of brackets **28**, a cable holder **30** and a linear motion bearing **32**, which can be a roller bearing or a slide bearing, which travels along a rectilinear race formed on the tilted guide bar **26** and allows the cable holder **30** to move along a linear path parallel to the tilted guide bar **26.** The tilted guide bar **26** is provided with two end stops **33**, which limit the motion of the cable holder **30** towards and away from a vertical longitudinal median plane **P** of the gangway. The amplitude of the motion between the two stops **33**, measured in a direction perpendicular to the vertical longitudinal median plane **P** of the gangway **10**, is preferably more than 30 cm.

Cable receptacles **34**, **36** attached to the two vehicle bodies at each end of the gangway **10** have been illustrated in the figures. Cables **38** that run through the gangway **10** from a receptacle **34** at one end **18** of the gangway **10** to a receptacle **36** at the other end **20** of the gangway **10** have a loose portion between the receptacles **34**, **36** which is substantially U-shaped when the two vehicle bodies are aligned. The central part of the U-shaped loose portion of each cable **38** is received in a corresponding hole **40** of the cable holder. The cable **38** can be loosely received in the hole **40** or can be clamped into the hole **40.**

When the vehicle negotiates a curve, the cable receptacles **34**, **36** on the two vehicle bodies on the inner side of the curve get closer to one another, whereas the cable receptacles **34**, **36** on the outer side of the curve move away from one another. As a result, the U-shaped loose portion of each cable **38** on the inner side of the curve folds on itself whereas the U-shaped loose portion of each cable **38** on the outer side of the curve tends to straighten up. The cable holder **30** on the inner side of the curve, pushed by the cables **38**, moves down towards the passageway **16** and the vertical longitudinal median plane **P** of the gangway **10**, whereas the cable holder **30** on the outer side of the curve, pulled by the cables **38**, moves up and away from the passageway **16** and from the vertical longitudinal median plane **P** of the gangway **10.** On both sides, the motion of the cable holder **30** is limited by the corresponding stop **28.** Because the cable holder **30** follows the motion of the cables **38**, the position of the loose portion of the cables **38** is controlled.

Because the guide bar **26** is tilted, the weight of the cable holder **30** and of the loose portion of the cables **38** tends to move the cable holder **30** towards the vertical longitudinal median plane **P** of the gangway **10**, which is a further assistance when the vehicle exits a curve.

## Claims

1. A gangway (10) for a public transportation vehicle provided with cables (38) running from a first vehicle body at a first end (18) of the gangway (10) to a second vehicle body at a second end (20) of the gangway (10), wherein the gangway (10) comprises a passageway (16) and is provided with a cable guide device (24) comprising a fixed support (26), a cable holder (30) for supporting a section of the cables (38), wherein the fixed support (26) and cable holder (30) are located on one lateral side of the passageway (16), **characterised in that** the gangway (10) is provided with guiding means (32) for guiding the cable holder (30) with respect to the fixed support (26), the guiding means (32) allowing the cable holder (30) to move towards and away from a vertical longitudinal median plane (P) of the gangway (10) along a predetermined path and **in that** the predetermined path is tilted with respect to the vertical longitudinal median plane (P).

2. The gangway (10) of claim 1, wherein the guiding means (26) include a linear bearing for guiding the cable holder (30) along a rectilinear path.

3. The gangway (10) of claim 1 or claim 2, wherein the path slopes upward away from the vertical longitudinal median plane (P) of the gangway (10).

4. The gangway (10) of any one of the preceding claims, wherein the path is located in a vertical transverse plane perpendicular to the vertical longitudinal median plane (P) of the gangway (10).

5. The gangway (10) of any one of the preceding claims, wherein the cable holder (30) comprises a plurality of through holes (38) for receiving the cables.

6. The gangway (10) of any one of the preceding claims, further comprising inner and outer bellows (12, 14), wherein the fixed support (26) and cable holder (30) are located between the inner and outer bellows (12, 14).

7. The gangway (10) of any one of the preceding claims, further comprising a gangway frame (22), wherein the fixed support (26) is integral with or attached to the gangway frame (22).

8. The gangway (10) of any one of the preceding claims, further comprising a further cable guide device (24) comprising a further fixed support (26), a further cable holder (30) and further guiding means (32) for guiding the further cable holder (30) with respect to the further fixed support (26), the further guiding means (32) allowing the further cable holder (30) to move towards and away from the vertical longitudinal median plane (P) of the gangway (10), wherein the further fixed support (26) and further cable holder (30) are located on the other side of the passageway (16).

9. The gangway (10) of any one of the preceding claims, wherein the allowed motion of the cable holder (30) towards and away from the vertical longitudinal median plane (P) of the gangway (10) has an amplitude of at least 30 cm measured in a direction perpendicular to the vertical longitudinal median plane (P) of the gangway (10).

10. A vehicle comprising a first vehicle body, a second vehicle body and an articulated gangway (10) between the first vehicle body and second vehicle body, the vehicle being provided with cables (38) running from the first vehicle body at a first end (18) of the gangway (10) to the second vehicle body at a second end (20) of the gangway (10), **characterised in that** the gangway (10) is a gangway according to any one of the preceding claims, wherein a section of the cables (38) is supported by the cable holder (30) and the cables (38) run along a curved path through the gangway (10) at least when the first vehicle body and second vehicle body are aligned.

11. The vehicle of claim 10, wherein the curved path is U-shaped.

12. The vehicle of claim 10 or claim 11, further provided with a set of one or more first tubular receptacles (34) fixed relative to the first vehicle body for receiving a first part of the cables (38) and a set of one or more second tubular receptacles (36) fixed relative to the second vehicle body for receiving a second part of the cables (38), wherein the cables (38) run out of the set of first tubular receptacles (34) at the first end (18) of the gangway along the curved path through the gangway (10) and into the set of second tubular receptacles (36) at the second end (20) of the gangway (10).

## Patentansprüche

1. Übergang (10) für ein öffentliches Transportfahrzeug, der mit Kabeln (38) bereitgestellt ist, die von einem ersten Fahrzeugkörper an einem ersten Ende (18) des Übergangs (10) zu einem zweiten Fahrzeugkörper an einem zweiten Ende (20) der Übergangs (10) verlaufen, wobei der Übergang (10) einen Durchgang (16) umfasst und mit einer Kabelführungsvorrichtung (24) bereitgestellt ist, umfassend einen fixierten Träger (26), einen Kabelhalter (30) zum Halten eines Abschnitts der Kabel (38), wobei der fixierte Träger (26) und der Kabelhalter (30) auf einer lateralen Seite des Durchgangs (16) angeordnet sind, **dadurch gekennzeichnet, dass** der Übergang (10) mit einem Führungsmittel (32) zum Führen des Kabelhalters (30) in Bezug auf den fixierten Träger (26) bereitgestellt ist, wobei das Führungsmittel (32) es dem Kabelhalter (30) ermöglicht, sich zu und von einer vertikalen medianen Längsebene (P) des Übergangs (10) entlang einem vorbestimmten Pfad zu bewegen und dass der vorbestimmte Pfad in Bezug auf die vertikale mediane Längsebene (P) gekippt ist.

2. Übergang (10) nach Anspruch 1, wobei das Führungsmittel (26) ein lineares Lager zum Führen des Kabelhalters (30) entlang einem geradlinigen Pfad enthält.

3. Übergang (10) nach Anspruch 1 oder Anspruch 2, wobei sich der Pfad aufwärts von der vertikalen medianen Längsebene (P) der Übergang (10) hinweg abschrägt.

4. Übergang (10) nach irgendeinem der voranstehenden Ansprüche, wobei der Pfad in einer vertikalen, transversalen Ebene angeordnet ist, die lotrecht zu der vertikalen, medianen Längsebene (P) des Übergangs (10) ist.

5. Übergang (10) nach irgendeinem der voranstehenden Ansprüche, wobei der Kabelhalter (30) eine Vielzahl von Durchgangslöchern (38) zum Aufnehmen der Kabel umfasst.

6. Übergang (10) nach irgendeinem der voranstehenden Ansprüche, weiterhin umfassend innere und äußere Balgen (12, 14), wobei der fixierte Träger (26) und Kabelhalter (30) zwischen den inneren und äußeren Balgen (12, 14) angeordnet sind.

7. Übergang (10) nach irgendeinem der voranstehenden Ansprüche, weiterhin umfassend einen Übergangsrahmen (22), wobei der fixierte Träger (26) in den Übergangsrahmen (22) eingebaut oder daran befestigt ist.

8. Übergang (10) nach irgendeinem der voranstehenden Ansprüche, weiterhin umfassend eine weitere Kabelführungsvorrichtung (24), umfassend einen weiteren fixierten Träger (26), einen weiteren Kabelhalter (30) und ein weiteres Führungsmittel (32) zum Führen des weiteren Kabelhalters (30) in Bezug auf den weiteren fixierten Träger (26), wobei das weitere Führungsmittel (32) dem weiteren Kabelhalter (30) ermöglicht, sich zu und von der vertikalen medianen Längsebene (P) des Übergangs (10) zu bewegen, wobei der weitere fixierte Träger (26) und der weitere Kabelhalter (30) auf der anderen Seite des Durchgangs (16) angeordnet sind.

9. Übergang (10) nach irgendeinem der voranstehenden Ansprüche, wobei die ermöglichte Bewegung des Kabelhalters (30) zu und von der vertikalen medianen Längsebene (P) des Übergang (10) eine Amplitude von wenigstens 30 cm gemessen in einer Richtung aufweist, die lotrecht zu der vertikalen medianen Längsebene (P) des Übergangs (10) ist.

10. Fahrzeug, umfassend einen ersten Fahrzeugkörper, einen zweiten Fahrzeugkörper und einen artikulierten Übergang (10) zwischen dem ersten Fahrzeugkörper und dem zweiten Fahrzeugkörper, wobei das Fahrzeug mit Kabeln (38) bereitgestellt ist, die vom ersten Fahrzeugkörper an einem ersten Ende (18) des Übergang (10) zum zweiten Fahrzeugkörper an einem zweiten Ende (20) des Übergangs 10) verlaufen, **dadurch gekennzeichnet, dass** der Übergang (10) ein Übergang nach irgendeinem der voranstehenden Ansprüche ist, wobei ein Abschnitt der Kabel (38) durch den Kabelhalter (30) gehalten ist und die Kabel (38) entlang einem gekrümmten Pfad durch den Übergang (10) wenigstens dann entlang laufen, wenn der erste Fahrzeugkörper und der zweite Fahrzeugkörper gefluchtet sind.

11. Fahrzeug nach Anspruch 10, wobei der gekrümmte Pfad U-förmig ist.

12. Fahrzeug nach Anspruch 10 oder Anspruch 11, weiterhin bereitgestellt mit einem Satz von einer oder mehreren ersten röhrenförmigen Steckerbuchse(n) (34), die relativ zu dem ersten Fahrzeugkörper zum Empfangen eines ersten Teils der Kabel (38) befestigt sind, und einem Satz von einer oder mehreren zweiten röhrenförmigen Steckerbuchse(n) (36), die relativ zu dem zweiten Fahrzeugkörper zum Empfangen eines zweiten Teils der Kabel (38) befestigt sind, wobei die Kabel (38) aus dem Satz von ersten röhrenförmigen Steckerbuchsen (34) am ersten Ende (18) des Übergangs entlang dem gekrümmten Pfad durch den Übergang (10) und in den Satz von zweiten röhrenförmigen Steckerbuchse (36) am zweiten Ende (20) des Übergangs (10) verlaufen.

## Revendications

1. Passerelle (10) pour un véhicule de transport public pourvu de câbles (38) s'étendant d'un premier corps de véhicule à une première extrémité (18) de la passerelle (10) à un second corps de véhicule à une seconde extrémité (20) de la passerelle (10), dans laquelle la passerelle (10) comprend un passage (16) et est pourvue d'un dispositif de guidage de câble (24) comprenant un support fixe (26), un support de câble (30) pour supporter une section des câbles (38), dans laquelle le support fixe (26) et le support de câble (30) sont situés sur un côté latéral du passage (16), **caractérisée en ce que** la passerelle (10) est pourvue d'un moyen de guidage (32) pour guider le support de câble (30) par rapport au support fixe (26), le moyen de guidage (32) permettant au support de câble (30) de se rapprocher et de s'éloigner d'un plan médian longitudinal vertical (P) de la passerelle (10), le long d'un trajet prédéterminé, et **en ce que** le trajet prédéterminé est incliné par rapport au plan médian longitudinal vertical (P).

2. Passerelle (10) selon la revendication 1, dans laquelle le moyen de guidage (26) comprend un palier linéaire pour guider le support de câble (30) le long d'un trajet rectiligne.

3. Passerelle (10) selon la revendication 1 ou la revendication 2, dans laquelle le trajet s'incline vers le haut à partir du plan médian longitudinal vertical (P) de la passerelle (10).

4. Passerelle (10) selon l'une quelconque des revendications précédentes, dans laquelle le trajet est situé dans un plan transversal vertical perpendiculaire au plan médian longitudinal vertical (P) de la passerelle (10) .

5. Passerelle (10) selon l'une quelconque des revendications précédentes, dans laquelle le support de câble (30) comprend une pluralité de trous traversants (38) pour recevoir les câbles.

6. Passerelle (10) selon l'une quelconque des revendications précédentes, comprenant en outre des soufflets intérieur et extérieur (12, 14), dans laquelle le support fixe (26) et le support de câble (30) sont situés entre les soufflets intérieur et extérieur (12, 14) .

7. Passerelle (10) selon l'une quelconque des revendications précédentes, comprenant en outre un cadre de passerelle (22), dans laquelle le support fixe (26) est solidaire du, ou attaché au cadre de passerelle (22).

8. Passerelle (10) selon l'une quelconque des revendications précédentes, comprenant en outre un autre dispositif de guidage de câble (24) comprenant un autre support fixe (26), un autre support de câble (30) et un autre moyen de guidage (32) pour guider l'autre support de câble (30) par rapport au support fixe supplémentaire (26), le moyen de guidage supplémentaire (32) permettant au support de câble supplémentaire (30) de se rapprocher ou de s'éloigner du plan médian longitudinal vertical (P) de la passerelle (10), dans laquelle le support supplémentaire fixe (26) et le support de câble supplémentaire (30) sont situés de l'autre côté du passage (16) .

9. Passerelle (10) selon l'une quelconque des revendications précédentes, dans laquelle le mouvement autorisé du support de câble (30) pour se rapprocher ou s'éloigner du plan médian longitudinal vertical (P) de la passerelle (10) a une amplitude d'au moins 30 cm mesurée dans une direction perpendiculaire au plan médian longitudinal vertical (P) de la passerelle (10).

10. Véhicule comprenant un premier corps de véhicule, un second corps de véhicule et une passerelle articulée (10) entre le premier corps de véhicule et le second corps de véhicule, le véhicule étant pourvu de câbles (38) s'étendant du premier corps de véhicule à une première extrémité (18) de la passerelle (10) au second corps de véhicule à une seconde extrémité (20) de la passerelle (10), **caractérisé en ce que** la passerelle (10) est une passerelle selon l'une quelconque des revendications précédentes, dans lequel une section des câbles (38) est supportée par le support de câble (30) et les câbles (38) passent le long d'un trajet courbe à travers la passerelle (10) au moins lorsque le premier corps et le second corps du véhicule sont alignés.

11. Véhicule selon la revendication 10, dans lequel le trajet courbe est en forme de U.

12. Véhicule selon la revendication 10 ou la revendication 11, pourvu en outre d'un jeu d'un ou plusieurs premiers réceptacles tubulaires (34) fixés par rapport au premier corps du véhicule pour recevoir une première partie des câbles (38) et un jeu d'un ou plusieurs seconds réceptacles tubulaires (36) fixés par rapport au second corps du véhicule pour recevoir une seconde partie des câbles (38), dans lequel les câbles (38) sortent de l'ensemble de premiers réceptacles tubulaires (34) à la première extrémité (18) de la passerelle le long du trajet courbe à travers la passerelle (10) et pénètrent dans l'ensemble de seconds réceptacles tubulaires (36) à la seconde extrémité (20) de la passerelle (10).
